Europäisches Patentamt

European Patent Office

Office européen des brevets

(11) Numéro de publication: **0 399 863**
**A1**

## (12) DEMANDE DE BREVET EUROPEEN

(21) Numéro de dépôt: **90401207.7**

(22) Date de dépôt: **04.05.90**

(51) Int. Cl.5: **F22B  37/00, F16C  1/20, G01N  27/90**

(30) Priorité: **23.05.89 FR 8906726**

(43) Date de publication de la demande:
**28.11.90 Bulletin  90/48**

(84) Etats contractants désignés:
**BE CH DE ES FR LI SE**

(71) Demandeur: **FRAMATOME**
**Tour Fiat 1, Place de la Coupole**
**F-92400 Courbevoie(FR)**

(72) Inventeur: **Feuillet, Patrice**
**121 Rue du Berger**
**F-69280 Marcy L'Etoile(FR)**

(74) Mandataire: **Bouget, Lucien et al**
**Cabinet Lavoix 2, Place d'Estienne d'Orves**
**F-75441 Paris Cédex 09(FR)**

(54) **Dispositif d'introduction et de mise en place d'un outillage à l'intérieur d'un tube d'un échangeur de chaleur et utilisation de ce dispositif.**

(57) Le dispositif comporte un élément de transmission allongé (30) qui peut être déplacé à l'intérieur du tube du générateur de vapeur par un moyen de traction et de poussée. L'élément allongé (30) comporte un câble métallique central (31), une gaine périphérique souple (32) et une pluralité d'éléments annulaires (33) non reliés entre eux et enfilés l'un à la suite de l'autre sur la gaine souple (32). Un jeu (34) correspondant à la différence de longueur entre la gaine (32) et la longueur totale des éléments (33) placés bout à bout permet de déplacer l'élément (30) à l'intérieur du tube par poussée sans exercer d'effort important. Le dispositif permet en particulier d'introduire et de mettre en place des éléments chauffants dans les parties cintrées des tubes du faisceau d'un générateur de vapeur d'un réacteur nucléaire à eau sous pression.

FIG. 3

L'invention concerne un dispositif d'introduction et de mise en place d'un outillage à l'intérieur d'une partie cintrée d'un tube de générateur de vapeur.

Les générateurs de vapeur des réacteurs nucléaires à eau sous pression comportent un faisceau de tubes pliés en U et comportant deux branches droites dont les extrémités sont fixées dans une plaque tubulaire.

Les deux branches droites de chacun des tubes sont reliées entre elles par une partie cintrée dont le rayon de courbure est variable, suivant la position du tube dans le faisceau. Le faisceau comporte des tubes dont les extrémités sont fixées dans des ouvertures traversant la plaque tubulaire dans des zones plus ou moins éloignées de la périphérie de cette plaque de forme circulaire. Les tubes dont les extrémités traversent la plaque tubulaire au voisinage de sa périphérie comportent une partie cintrée à grand rayon de courbure alors que les tubes traversant la plaque tubulaire au voisinage de sa partie centrale comportent une partie cintrée à très faible rayon de courbure.

Les différentes parties cintrées des tubes du faisceau sont placées dans des positions adjacentes et constituent la partie supérieure du faisceau.

La plaque tubulaire comporte une face d'entrée sur laquelle les extrémités des tubes du faisceau sont affleurantes, cette face d'entrée de la plaque tubulaire constituant la paroi supérieure d'une boîte à eau disposée à la partie inférieure du générateur de vapeur.

La boîte à eau est séparée en deux parties par une cloison et chacun des tubes du faisceau débouche dans une des parties de la boîte à eau par l'une de ses extrémités et dans l'autre partie de la boîte à eau par son autre extrémité. L'eau sous pression du réacteur nucléaire est envoyée dans une des parties de la boîte à eau qui en assure la répartition dans les tubes du faisceau cette eau sous pression est ensuite recueillie, après circulation dans les tubes, dans la seconde partie de la boîte à eau.

Il peut être nécessaire, pour des opérations de réparation ou d'entretien du générateur de vapeur, d'introduire un outillage ou un dispositif de mesure ou de contrôle dans un tube du faisceau ou dans un certain nombre de tubes successivement.

Par exemple, dans le but de diminuer la sensibilité à la corrosion des parties cintrées des tubes du faisceau, on effectue un détensionnement de cette partie cintrée en introduisant à l'intérieur du tube un élément de chauffage électrique qui est mis en place dans le cintre puis alimenté en courant électrique pour effectuer le détensionnement du tube.

Ces opérations sont effectuées sur des générateurs de vapeur de réacteurs nucléaires qui sont contaminés, après une certaine période de fonctionnement du réacteur.

Il est donc nécessaire d'effectuer l'introduction et la mise en place des éléments de chauffage dans les cintres des tubes du faisceau à distance et depuis l'extérieur de la boîte à eau du générateur de vapeur.

On utilise pour cela un moyen de traction et de poussée prolongé par un conduit de guidage qui peut être introduit à l'intérieur de la boîte à eau et mis en place dans le prolongement d'un tube quelconque du faisceau par un dispositif tel qu'un bras de manutention disposé à l'intérieur de la boîte à eau. Le moyen de traction et de poussée permet de déplacer un élément de transmission flexible de forme allongée à l'intérieur du conduit de guidage et dans un tube quelconque du faisceau, depuis l'extérieur de la boîte à eau. L'élément de transmission comporte une extrémité munie d'une pièce d'accrochage qui est introduite puis déplacée dans le tube par poussée, jusqu'au moment ou cette pièce d'accrochage ressort par la seconde extrémité du tube dans laquelle elle a été introduite.

Un moyen de guidage complémentaire permet de récupérer l'extrémité de l'élément de transmission comportant la pièce d'accrochage au niveau d'une ouverture de la boîte à eau.

Un élément de chauffage électrique est fixé à la pièce d'accrochage à l'extérieur de la boîte à eau, puis introduit dans le tube par traction sur l'élément de transmission qui entraine l'élément de chauffage électrique par l'intermédiaire de la pièce d'accrochage.

Le déplacement par traction est effectué sur une longueur suffisante pour mettre en place l'élément de chauffage électrique suivant toute la longueur du cintre dans lequel on réalise le détensionnement

L'élément de transmission allongé qui est déplacé par poussée et par traction à l'intérieur des tubes du faisceau et qui est généralement désigné sous le nom de "furet" par les spécialistes, comporte une gaine dont le diamètre extérieur est inférieur au diamètre intérieur d'un tube. On obtient ainsi un guidage satisfaisant du furet à l'intérieur du tube.

Néanmoins, un tel dispositif ne permet pas de transmettre la poussée, lors de sa mise en place, de manière entièrement satisfaisante. Le furet a tendance à se courber par sections successives et à se bloquer à l'intérieur du tube, ce phénomène étant connu sous le nom de serpentage. Le frottement de la gaine du furet à l'intérieur du tube augmente jusqu'au moment où il n'est plus possible de continuer le déplacement par poussée. Ces inconvénients sont d'autant plus fréquents que la longueur des tubes suivant laquelle on doit déplacer le furet est plus importante.

On peut dans une certaine mesure éviter ces inconvénients en prenant des précautions pendant le déplacement du furet et en réalisant ce déplacement de manière très lente. De ce fait, la mise en place du furet est délicate et augmente le temps d'exposition des opérateurs aux radiations provenant du générateur de vapeur.

En outre, lors de la mise en place de l'outillage dans le cintre par traction sur le furet, celui-ci a tendance à s'allonger du fait des frottements importants entre la gaine et la surface intérieure du tube de générateur de vapeur. Il est donc très difficile de mettre en place l'outillage de manière précise dans la partie cintrée du tube. Cette mise en place défectueuse risque de compromettre le bon déroulement de l'opération effectuée par l'outillage.

Les frottements entre la gdine du furet et la surface intérieure du tube nécessitent des forces de traction très importantes, en particulier, dans le cas des parties cintrées à faible rayon de courbure situées à la partie centrale du faisceau. Dans ce cas, il devient très difficile sinon impossible de mettre en place de manière correcte un outillage tel qu'un élément de chauffage à l'intérieur du cintre.

Le but de l'invention est donc de proposer un dispositif d'introduction et de mise en place d'un outillage à l'intérieur d'un tube d'un échangeur de chaleur tel qu'un générateur de vapeur comportant un faisceau de tubes pliés en U présentant chacun deux branches droites dont les extrémités sont fixées dans des trous traversant une plaque tubulaire et une partie cintrée joignant les deux branches droites et, d'un côté de la plaque tubulaire, une boîte à eau délimitée par une face de la plaque tubulaire sur laquelle débouchent les extrémités des tubes, le dispositif d'introduction comportant, à l'extérieur de la boîte à eau, un moyen de traction et de poussée, un conduit de guidage relié à une extrémité de sortie du moyen de traction et de poussée pénétrant dans la boîte à eau et relié à un dispositif de mise en place du conduit de guidage en concordance avec une extrémité d'un tube quelconque débouchant de la plaque tubulaire et un élément de transmission de forme allongée, engagé dans le moyen de traction et de poussée pour son déplacement à l'intérieur du conduit de guidage et d'un tube du faisceau, comportant une pièce d'accrochage de l'outillage à l'une de ses extrémités, ce dispositif permettant de mettre en place, de manière simple et rapide et avec une très grande précision, un outillage dans une partie quelconque d'un tube du générateur de vapeur et en particulier, dans une partie cintrée à faible rayon de courbure.

Dans ce but, l'élément de transmission allongé comporte un câble central, une gaine périphérique souple dont le diamètre extérieur est inférieur au diamètre intérieur d'un tube du faisceau et une pluralité d'éléments annulaires dont le diamètre int rieur est supérieur au diamètre extérieur de la gaine et dont le diamètre extérieur est inférieur au diamètre intérieur d'un tube du faisceau, non reliés entre eux et enfilés l'un à la suite de l'autre sur la gdine souple de l'élément de transmissi'on, en un nombre tel que la longueur totale des éléments tubulaires placés bout à bout soit inférieure à la longueur de la gaine souple, d'une longueur sensiblement égale à la longueur d'un élément annulaire.

Afin de bien faire comprendre l'invention, on va maintenant décrire à titre d'exemples non limitatifs, en se référant aux figures jointes en annexe, plusieurs modes de réalisation d'un dispositif suivant l'invention utilisable pour l'introduction et la mise en place d'éléments de chauffage électrique dans les parties cintrées des tubes du faisceau d'un générateur de vapeur d'un réacteur nucléaire à eau sous pression.

La figure 1 est une vue générale en élévation et en coupe partielle d'un dispositif d'introduction et de mise en place d éléments de chauffage électrique dans les parties cintrées des tubes d'un générateur de vapeur.

La figure 2 est une vue en coupe par un plan vertical de la partie cintrée d'un tube dans laquelle un furet suivant l'art antérieur est introduit par poussée.

La figure 3 est une vue latérale et en coupe partielle de l'élément de transmission d'un dispositif suivant l'invention.

La figure 4 est une vue en coupe axiale à plus grande échelle de la partie extérieure de l'élément de transmission constitué par un empilement d'éléments annulaires.

La figure 5 est une vue latérale et en coupe partielle de la partie extérieure d'un élément de transmission d'un dispositif suivant l'invention et suivant une première variante de réalisation.

La figure 6 est une vue latérale de la partie extérieure de l'élément de transmission d'un dispositif suivant l'invention et suivant une seconde variante de réalisation.

La figure 7 est une vue latérale et en coupe partielle de la partie extérieure de l'élément de transmission · d'un dispositif suivant l'invention et suivant une troisième variante de réalisation.

La figure 8 est une vue latérale et en coupe partielle de la partie extérieure d'un élément de transmis sion suivant l'invention et suivant une quatrième variante de réalisation.

La figure 9 est une vue latérale de la partie extérieure d'un élément de transmission d'un dispositif suivant l'invention et suivant une cinquième variante de réalisation.

La figure 10 est une vue en coupe par un plan vertical de la partie cintrée d'un tube d'un générateur de vapeur dans laquelle est disposé un élément de transmission d'un dispositif suivant l'invention.

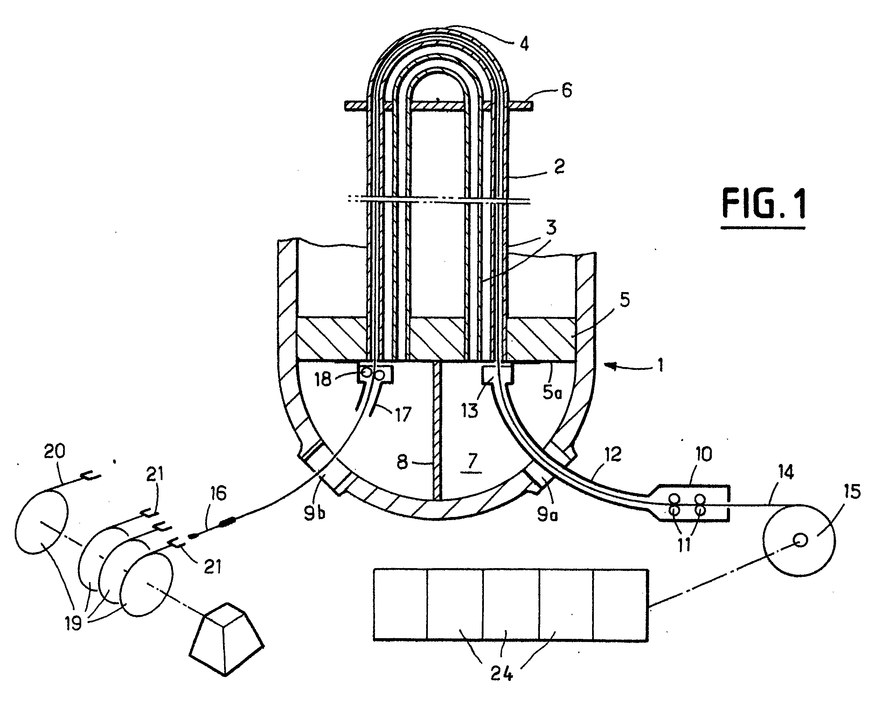

Sur la figure 1, on voit la partie inférieure d'un générateur de vapeur 1 et une partie du faisceau 2 de ce générateur de vapeur constitué par des tubes 3 pliés en U. Chacun des tubes 3 du faisceau comporte deux branches droites dont les extrémités sont fixées dans des trous traversant la plaque tubulaire 5 du générateur de vapeur et une partie cintrée 4 disposée dans la partie supérieure du faisceau.

Les tubes 3 sont maintenus suivant une disposition régulière dans le faisceau par des plaques, entretoises telles que 6 régulièrement réparties suivant la longueur des branches droites des tubes.

Les extrémités des branches droites des tubes 3 sont affleurantes sur la face inférieure 5a de la plaque tubulaire 5 constituant sa face d'entrée. La face 5a de la plaque tubulaire constitue la paroi supérieure d'une boîte à eau 7 de forme hémisphérique séparée en deux parties par une cloison 8.

Chacun des tubes 3 du faisceau comporte une première extrémité débouchant dans une première partie de la boîte à eau et une seconde extrémité débouchant dans la seconde partie de la boîte à eau.

Le générateur de vapeur 1 a été représenté sur la figure 1 pendant une opération de mise en place d'un outillage constitué par un élément de chauffage à l'intérieur d'un tube du faisceau.

Cette opération est effectuée pendant un arrêt du réacteur nucléaire, le générateur de vapeur étant refroidi et vide d'eau.

La boîte à eau 7 comporte deux trous d'homme 9a et 9b traversant sa paroi de part et d'autre de sa cloison 8.

Pendant le fonctionnement du réacteur, ces trous d'homme sont fermés par des plaques d'obturation étanches ces plaques sont en revanche démontées pour permettre l'introduction d'outillages d'intervention à l'intérieur de la boîte à eau du générateur de vapeur, pendant les périodes d'arrêt du réacteur nucléaire, pour effectuer l'entretien et la réparation du générateur de vapeur.

Le dispositif d'introduction et de mise en place d'éléments de chauffage représenté sur la figure 1 comporte un moyen de traction et de poussée 10 comportant deux paires de rouleaux motorisés 11. Le moyen de traction et de posée 10 est prolongé, à son extrémité de sortie, par un conduit de guidage 12 qui est introduit dans la boîte à eau 7 du générateur de vapeur, par le trou d'homme 9a. L'extrémité du conduit de guidage 12 opposée au moyen de poussée et de traction 10 est fixée sur un dispositif porteur 13 permettant de placer cette extrémité du conduit de guidage 12 dans le prolongement d'une extrémité d'un tube quelconque 3 du faisceau.

Le dispositif porteur 13 qui peut être fixé sous la plaque tubulaire ou qui peut être constitué par un bras monté à l'intérieur de la boîte à eau constitie un équipement classique dans le cadre des opérations d entretien des générateurs de vapeur des réacteurs nucléaires.

Le dispositif d'introduction et de mise en place d'un outillage représenté sur la figure 1 comporte de plus un élément de transmission allongé 14 d'une longueur suffisante pour que l'élément 14 puisse être introduit, par l'intermédiaire du conduit de guidage 12, suivant toute la longueur d'un tube quelconque 3 du faisceau et de manière à ressortir par le trou d'homme 9b, comme représenté sur la figure 1.

L'élément de transmission allongé 14 est stocké sur un dispositif envideur-dévideur 15 situé au voisinage de l'extrémité d'entrée du moyen de traction et de poussée 10.

L'élément 14 comporte, à son extrémité par laquelle est réalisée l'introduction dans le tube 3, une pièce de guidage et d'accrochage 16 en forme d'ogive.

A l'extrémité de sortie du tube 3 opposée à l'extrémité d'entrée située dans le prolongement du conduit 12 est disposé un second conduit de guidage 17 dans lequel passe l'élément 14, après traversée d'un dispositif de guidage et de mesure 18.

Au voisinage du trou d'homme 9b de la boîte à eau 7 est disposée une batterie de bobines 19 sur chacune desquelles est enroulé un élément de chauffage électrique 20 qui peut être introduit dans un tube 3 du faisceau pour réaliser le détensionnement de sa partie cintrée 4.

Les éléments de chaufage électriques 20 comportent, à leur extrémité, un élément d'accrochage 21 permettant de relier l'élément de chauffage 20 à la pièce de guidage et d'accrochage 16 d'un élément de transmission 14.

Les opérations nécessaires pour l'introduction et la mise en place d'un élément de chauffage dans la partie cintrée d'un tube 3 du faisceau qui seront décrites ci-dessous sont commandées par des armoires de contrôle et de commande 24 qui sont reliées aux différents éléments du dispositif et en particulier à l'enrouleur-dévideur 15 et au moyen de traction et de poussée 10.

Au démarrage de l'opération, l'élément allongé 14 est entièrement enroulé sur l'envideur-dévideur 15, la pièce d'extrémité 16 restant accessible à l'extérieur de l'envideur-dévideur.

L'élément 14 est introduit dans le moyen de traction et de poussée 10 qui est mis en fonctionnement dans le sens de la poussée. L'élément 14 précédé par la pièce d'extrémité 16 progresse à l'intérieur du tube de guidage 12, puis à l'intérieur du tube 3 situé dans le prolongement du conduit 12.

La pièce 16 constituant l'extrémité de l'élément 14 ressort du tube 3 par son extrémité de sortie et pénètre dans le dispositif 18 puis dans le conduit de guidage 17 qui fait parvenir la pièce 16 au niveau du trou d'homme 9b.

On continue à déplacer l'élément 14 par poussée jusqu' au moment où une longueur suffisante de cet élément souple est sortie de la boîte à eau pour qu'on puisse effectuer le raccordement entre la pièce 16 et le dispositif d'accrochage 21 de l'un des éléments de chauffage 20 enroulé sur une bobine 19.

On inverse alors le sens de fonctionnement du moyen de traction et de poussée 10, de manière à exercer une traction sur l'élément 20, par l'intermédiaire de l'élément allongé 14.

La bobine 19 correspondante est mise en rotation et l'élément de chauffage est ainsi déroulé puis introduit dans la boîte à eau, dans le conduit de guidage 17 et dans le tube 3.

L'introduction de l'élément de chauffage dans le tube 3 se poursuit par traction sur l'élément de transmission allongé 14, jusqu' au moment où une mise en place satisfaisante de l'élément de chauffage dans le cintre 4 a pu être obtenue. Cette mise en place est contrôlée par mesure de la longueur de l'élément 14 qui a été déplacée par traction, depuis une position de référence.

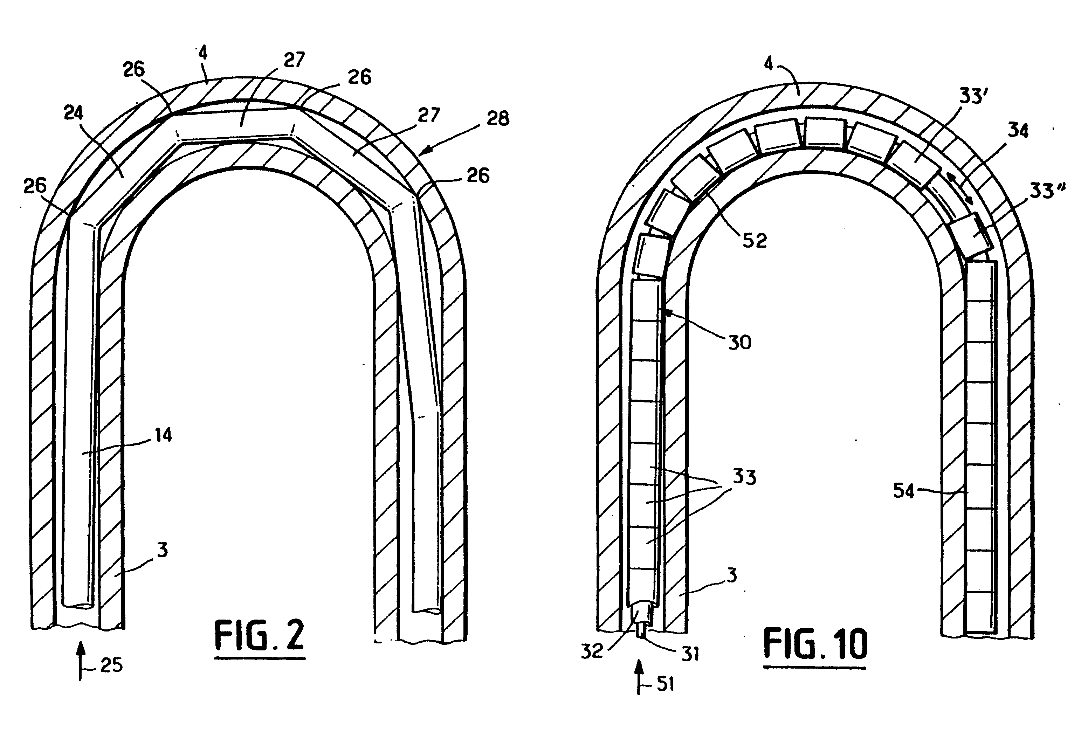

Sur la figure 2, on voit la partie supérieure cintrée 4 d'un tube 3 du faisceau d'un générateur de vapeur, pendant l'introduction par poussée d'un élément allongé 14 constitué par un furet suivant l'art antérieur. La gaine externe du furet 14 présente un diamètre inférieur au diamètre intérieur du tube 3 du faisceau.

De manière à transmettre des efforts de poussée dans la direction axiale du tube (flèche 25) par l'intermédiaire du furet 14, ce furet doit présenter une rigidité relativement importante, tout en gardant des caractéristiques de flexion lui permettant de passer dans les parties cintrées 4 à faible rayon de courbure.

Il peut être nécessaire en effet d'exercer des efforts de poussée relativement importants, dans la mesure où les forces de frottement de la gaine du furet sur la paroi intérieure du tube sont elles-mêmes importantes lors du passage dans les parties cintrées.

Du fait de sa rigidité relative, la gaine du furet 14 se plie de manière anguleuse, en créant des zones de cas sure 26 entre lesquelles la gaine constitue des troncons rectilignes 27.

La force de poussée doit donc être importante pour vaincre les forces de frottement et de blocage de la gaine à l'intérieur de la partie cintrée 4.

En particulier, l'effort de poussée doit être extrêmement important pour assurer le passage de la gaine du furet 14 dans la partie terminale 28 du cintre 4.

En outre, les cassures 26 de forme sensiblement anguleuse de la gaine du furet 14 risquent d'entraîner la rupture du furet, soit lors de son déplacement initial par poussée, soit lors de la mise en place de l'outillage dans le tube par traction sur le furet.

Dans l'un et l'autre cas, il est très difficile de récupérer, à l'intérieur du tube, la partie d'extrémité du furet et/ou l'outillage fixé à cette partie d'extrémité.

De plus, comme indiqué plus haut, lors de la mise en place de l'outillage par traction sur le furet 14, celui-ci subit un certain allongement, lorsque les forces de traction exercées dépassent un certain niveau. Dans ce cas, la mise en place de l'outillage dans le tube n'est contrôlée que de manière approximative.

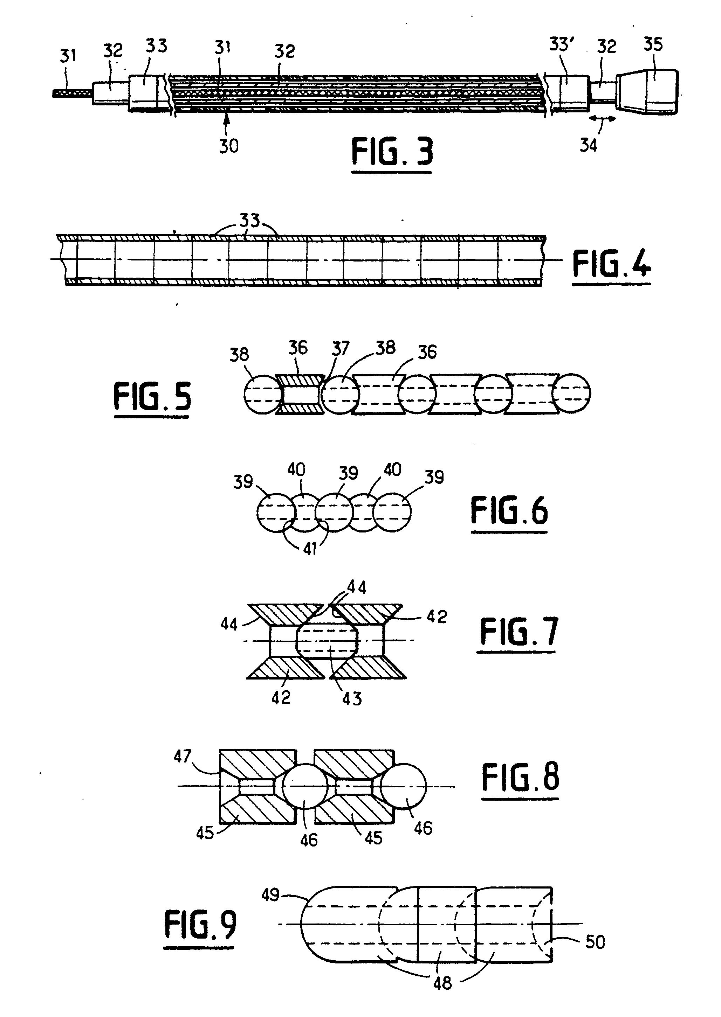

Sur la figure 3, on a représenté l'élément de transmission allongé d'un dispositif d'introduction et de mise en place suivant l'invention permettant de pallier les inconvénients mentionnés ci-dessus.

L'élément de transmission allongé désigné de manière générale par le repère 30 est réalisé sous forme coaxiale et comporte une partie centrale 31 constituée par un câble métallique, par exemple en acier, une gaine souple en matière plastique 32 disposée autour du câble 31 et un ensemble d'éléments annulaires 33 enfilés sur la gaine souple 32.

Le câble 31 et la gaine 32 sont reliés, à l'une de leurs extrémités, à une pièce de guidage et d'accrochage 35 en forme d'ogive permettant de guider l'élément allongé de transmission à l'intérieur d'un tube du générateur de vapeur et de relier cet élément allongé de transmission à un outillage, tel qu'un élément de chauffage électrique.

Comme il est visible sur les figures 3 et 4, les éléments annulaires 33 peuvent être constitués par des portions de tubes droits disposés l'un à la suite de l'autre de manière jointive.

Ces éléments annulaires 33 présentent un diamètre extérieur inférieur au diamètre intérieur d'un tube du générateur de vapeur et un diamètre intérieur supérieur au diamètre extérieur de la gaine souple 32. De cette manière, les éléments annulaires 33 sont montés librement coulissants sur la gaine 32.

Les éléments annulaires 33 sont tous identiques et présentent une longueur sensiblement égale à leur diamètre extérieur, c'est-à-dire inférieure au diamètre intérieur des tubes du générateur de vapeur.

Dans le cas des générateurs de vapeur des réacteurs nucléaires à eau sous pression construits actuellement, ce diamètre intérieur des tubes du faisceau a une valeur voisine de deux centimètres.

Les éléments annulaires 33 sont enfilés de manière jointive sur la gaine 32 et suivant toute sa longueur, le nombre d'éléments utilisés étant défini par la longueur de la gaine correspondant à la longueur de l'élément allongé de transmission.

Toutefois, comme il est visible sur la figure 3, on ménage un jeu 34 dont l'amplitude totale pour l'ensemble des éléments annulaires 33 disposés bout à bout suivant la longueur de la gaine 32 a une valeur sensiblement égale à la longueur de l'un des éléments 33. Sur la figure 3, les éléments 33 ont été représentés de manière jointive sur toute la longueur de la gaine 32, le jeu 34 se traduisant par un espacement entre le premier élément annulaire 33' et la pièce en ogive 35.

Les éléments annulaires 33 seront de préférence réalisés en une matière plastique rigide.

Sur les figures 5 à 9, on a représenté différentes variantes de réalisation des éléments annulaires constituant la partie extérieure de l'élément allongé de transmission du dispositif d'introduction et de mise en place suivant l'invention.

Suivant les cas, ces éléments sont tous identiques ou présentent des formes différentes et complémentaires.

Sur la figure 5, les éléments annulaires sont constitués successivement par des anneaux cylindriques 36 chanfreinés à leurs extrémités 37 et par des billes sphériques 38 traversées chacune par un alésage de direction radiale.

Les éléments annulaires 36 et 38 sont enfilés l'un à la suite de l'autre, de manière alternée, sur la gaine de l'élément allongé de transmission. De cette manière, les surfaces externes sphériques des billes 38 viennent s'engager, par leur partie située à la périphérie de l'alésage central de la bille 38, dans les parties chanfreinées 37 ménagées à l'extrémité des anneaux 36.

De cette manière, on peut obtenir un très bon alignement des éléments annulaires successifs, suivant la direction longitudinale de l'élément allongé en même temps qu'une possibilité de déflexion des éléments annulaires les uns par rapport aux autres.

Les alésages des anneaux 36 et des sphères 38 présentent des diamètres supérieurs au diamètre extérieur de la gaine souple de l'élément allongé.

De plus, les anneaux 36 et les sphères 38 présentent des diamètres extérieurs identiques.

Sur la figure 6, on voit une seconde variante de réalisation des éléments annulaires constituant la partie extérieure de l'élément allongé de transmission.

Ces éléments annulaires sont constitués successivement, suivant la longueur de l'élément de transmission, par une bille sphérique 39 comportant un alésage de direction radiale et par une bille 40 comportant deux calottes sphériques 41 concaves dirigées vers l'extérieur. Les billes 40 sont également traversées par un alésage de direction radiale dont le diamètre est sensiblement égal au diamètre de l'alésage des billes 39 ce diamètre est supérieur au diamètre extérieur de la gaine souple de l'élément allongé de transmission.

Lorsque les billes 39 et 40 sont enfilées successivement sur la gaine souple de l'élément de transmission, les surfaces externes des billes 39, autour de l'alésage de direction radiale, viennent s'engager dans les calottes concaves 41 des billes 40 intercalées entre les billes 39.

De cette manière, on obtient un très bon alignement de l'ensemble des éléments annulaires, suivant la longueur de l'élément de transmission ainsi qu'une possibilité d'orientation des éléments les uns par rapport aux autres.

Sur la figure 7, on a représenté des éléments annulaires 42 et 43 destinés à être enfilés de manière successive et alternée sur la gaine souple d'un élément allongé de transmission.

Les éléments 42 sont constitués par des anneaux comportant des surfaces tronconiques 44 usinées sur chacune de leurs faces et les éléments 43 sont constitués par des pièces tubulaires chanfreinées à leurs extrémités venant s'intercaler entre les surfaces tronconiques successives 44 de deux pièces 42, lorsque les éléments 42 et 43 sont enfilés sur la gaine de l'élément de transmission.

Les anneaux 42 et les pièces tubulaires 43 comportent un alésage interne dont le diamètre est supérieur au diamètre extérieur de la gaine de l'élément de transmission.

Sur la figure 8, on a représenté des éléments annulaires 45 et 46 disposés l'un à la suite de l'autre et de manière alternée, suivant la longueur de l'élément de transmission allongé.

Les éléments 45 sont constitués par des anneaux cylindriques comportant des surfaces tronconiques 47 usinées en creux sur chacune de leurs faces. Les éléments 46 intercalés chacun entre deux éléments 45 sont constitués par des sphères traversées par un alésage de direction radiale dont le diamètre est supérieur au diamètre de la gaine souple de l'élément de transmission allongé. Les surfaces externes des billes 46, autour de l'alésage de direction radiale, viennent en contact avec les surfaces tronconiques creuses 47 des anneaux 45.

On obtient ainsi un assemblage des éléments annulaires de proche en proche, de manière à permettre leur alignement suivant la direction longitudinale de l'élément allongé. Comme précédemment, on obtient également une possibilité de déflection des éléments les uns par rapport aux autres, pour assurer un passage dans les parties courbes des tubes.

Sur la figure 9, on a représenté des éléments annulaires successifs 48 qui sont tous identiques et qui sont constitués par des anneaux cylindriques dont une extrémité présente la forme d'une calotte sphérique convexe 49 et dont l'autre extrémité comporte une partie en creux en forme de calotte sphérique concave 50. Les éléments 48 comportent un alésage intérieur dont le diamètre est supérieur au diamètre extérieur de la gaine souple de l'élément allongé de transmission.

Lorsque les éléments 48 sont enfilés l'un à la suite de l'autre sur la gaine souple de l'élément allongé, les extrémités 49 en forme de calotte sphérique convexe viennent s'engager dans les parties creuses 50 en forme de calotte sphérique concave de manière à assurer un encastrement et un assemblage des élé ments 48 avec un très bon alignement suivant la direction axiale de l'élément allongé, tout en gardant une possibilité de déflection des éléments l'un par rapport à l'autre, pour permettre le passage de l'élément de transmis sion dans les parties courbes des tubes.

Sur la figure 10, on a représenté un élément de transmission allongé 30 d'un dispositif d' introduction et de mise en place d'un outillage suivant l'invention, à l'intérieur d'une partie cintrée 4 à faible rayon de courbure d'un tube 3 d'un générateur de vapeur, pendant le déplacement par poussée de l'élément à l'intérieur du tube 3.

La poussée est exercée suivant la direction et le sens de la flèche 51, c'est-à-dire suivant la direction axiale du tube 3.

Les éléments annulaires constituant la partie extérieure de l'élément de transmission 30 sont constitués par des anneaux 33 tels que représentés sur les figures 3 et 4.

La partie centrale de l'élément allongé constitué par le câble 31 et la gaine 32 présente une souplesse lui permettant d'épouser parfaitement la forme de la partie cintrée 4 du tube 3. En outre, cette partie centrale présente un diamètre sensiblement inférieur au diamètre intérieur du tube 3, si bien qu'il ne se produit pas de contact frottant entre la gaine 32 et la surface intérieure du tube 3 dans la partie cintrée 4.

Les éléments annulaires 33 disposés autour de la partie centrale assurent le guidage de l'élément allongé pendant son déplacement dans le tube. Ces éléments annulaires en matière plastique ne sont pas susceptibles de détériorer la surface intérieure du tube par frottement. En outre, comme il est visible sur la figure 10, ces éléments sont susceptibles de pivoter légèrement les uns par rapport aux autres, pour accomoder la courbure dela partie cintrée 4. Chacun des éléments annulaires 33 s'appuie sur la surface intérieure du tube 3, suivant une génératrice 52 dont l'orientation permet d'épouser parfaitement la forme du cintre.

Au cours du déplacement de l'élément allongé de transmission 30 à l'intérieur du tube 3, la poussée exercée sur les anneaux 33 empilés les un s sur les autres provoque leur déplacement dans la partie droite du tube précédant la partie cintrée 4 et dans cette partie cintrée.

A la sortie de la partie cintrée 4, les éléments annulaires 33 viennent s'empiler les uns sur les autres dans la partie droite du tube située à la suite de la partie cintrée 4, pour constituer une colonne 54 dans laquelle les éléments annulaires 33 sont jointifs.

Le jeu 34 correspondant à la différence de longueur entre la partie centrale de l'élément allongé et la succession d' éléments annulaires se retrouve à la sortie de la partie cintrée 4, entre le dernier élément annulaire $33'$ sur lequel s'exerce la poussée et l'élément supérieur $33''$ de la colonne 54. Les éléments 33 passent de la position $33'$ à la position $33''$ sous l'effet de la gravité.

Le jeu 34 dont la valeur correspond sensiblement à la longueur d'un élément annulaire 33 permet d'obtenir une certaine souplesse de la partie centrale de l'élément de transmission constitué par le câble 31 et la gaine 32.

La poussée nécessaire pour déplacer l'élément de transmission allongé 30 à l'intérieur du tube 3 peut dont être limitée à un niveau faible, puisque l'élément allongé présente une souplesse lui permettant d'épouser la fume des cintres des tubes, qu'il ne se produit pas de frottement important entre la surface extérieure de cet élément allongé et la surface intérieure du tube et que le guidage de l'élément allongé est cependant assuré de manière efficace.

Lorsque l'extrémité de l'élément allongé de transmission comportant l'ogive 35 est parvenue dans une position lui permettant d'être fixée sur l'extrémité de l'outillage à introduire dans le tube, on réalise cette jonction, puis on change le sens d' actionnement du dispositif de traction et de poussée. La traction exercée sur l'élément allongé est transmise par l'intermédiaire du câble métallique central 31 qui ne subit pas d'allongement notable. L'outillage peut donc être placé dans le cintre 4 d'une manière extrêmement précise. Dans cette phase de déplacement par traction, les éléments annulaires 33 ne jouent aucun rôle actif.

L'élément de transmission du dispositif suivant l'invention présenta une très bonne rigidité en compression, lors de la poussée, dans la mesure où la partie centrale souple est entourée par une succession d'anneaux rigides. D'autre part, cet élément allonge présente de très bonnes caractéristiques de flexion puisque sa partie centrale est réalisée sous une forme souple et que sa partie externe est constituée par des anneaux qui sont susceptibles de pivoter les uns par rapport aux autres dans les parties courbes du tube.

L'élément allongé du dispositif suivant l'invention présente en outre une très bonne résistance a la déformation par traction, grâce au câble métallique constituant l'âme de sa partie centrale souple.

Lorsqu'on applique un effort de traction sur les anneaux de l'élément de transmission, par un train-pousseur, par exemple du type à galets, on réalise ainsi un auto-coincement des anneaux sur la partie centrale de l'élément de transmission, ce qui améliore les conditions de transmission de l'effort et la facilité d'introduction de l'élément de transmission dans ce tube.

On peut faire passer des fils ou câbles tels que des conducteurs électriques entre le câble métallique et la gaine de la partie centrale de l'élément de transmission. On peut ainsi, par exemple, adapter une caméra à l'extrémité de l'élément de transmission ou encore une sonde à courant de Foucault ou une sonde à ultrasons.

L'invention ne se limite pas aux modes de réalisation qui ont été décrits.

C'est ainsi qu'on peut concevoir des éléments annulaires constituant la partie externe de l'élément de transmission allongé du dispositif d'une forme différente de celles qui ont été décrites. Il est bien évident que le moyen de traction et de poussée de l'élément allongé devra comporter des organes d'entrainement concus pour coopérer avec les éléments annulaires choisis pour constituer la partie externe de l'élément de transmission.

Dans le cas des générateurs de vapeur des réacteurs nucléaires à eau sous pression, l'élément de transmission allongé devra présenter une longueur de l'ordre de 40 m.

Le dispositif d'introduction et de mise en place suivant l'invention pourra être utilisé successivement sur différents tubes du faisceau du générateur de vapeur pour la mise en place d'outillages dans chacun de ces tubes. Les outillages pourront être mis en oeuvre simultanément après leur mise en place.

Le dispositif suivant l'invention permet de mettre en place des outillages aussi bien dans les tubes ayant des cintres de grand diamètre, de l'ordre de 6 m, que dans les tubes ayant des petits cintres dont le diamètre est d'environ 10 cm.

Les outillages mis en place peuvent être de tout type et utilisés pour effectuer une opération quelconque à l'intérieur du tube.

L'invention s'applique à tout générateur de vapeur comportant des tubes ayant une partie cintrée joignant deux branches de grande longueur.

Le dispositif peut être utilisé pour effectuer une intervention dans un tube d'un échangeur de chaleur différent d'un tube de générateur de vapeur d'un réacteur nucléaire à eau sous pression.

## Revendications

1.- Dispositif d'introduction et de mise en place d un outillage à l'intérieur d'un tube (3) d'un échangeur de chaleur tel qu'un générateur de vapeur (1) comportant un faisceau de tubes (2) pliés en U présentant chacun deux branches droites dont les extrémités sont fixées dans des trous traversant une plaque tubulaire (5) et une partie cintrée (4) joignant les deux branches droites et, d'un côté de la plaque tubulaire (5), une boîte à eau (7) délimitée par une face (5a) de la plaque tubulaire sur laquelle débouchent les extrémités des tubes (3), le dispositif d'introduction comportant, à l'extérieur de la boîte à eau (7), un moyen de traction et de poussée (10), un conduit de guidage (12) relié à une extrémité de sortie du moyen de traction et de poussée (10), pénétrant dans la boîte à eau (7) et reliée à un dispositif (13) de mise en place du conduit de guidage (12) en concordance avec une extrémité d'un tube (3) quelconque débouchant de la plaque tubulaire (5) et un élément de transmission (14) de forme allongée engagé dans le moyen de traction et de poussée (10) pour son déplacement à l'intérieur du conduit de guidage (12) et d'un tube (3) du faisceau comportant une pièce (16) d'accrochage de l'outillage (20) à l'une de ses extrémités, caractérisé par le fait que l'élément de transmission (14, 30) allongé comporte un câble métallique central (31), une gaine périphérique souple (32) dont le diamètre extérieur est inférieur au diamètre intérieur d'un tube du faisceau et une pluralité d'éléments annulaires (33) dont le diamètre intérieur est supérieur au diamètre extérieur de la gaine (32) et dont le diamètre extérieur est inférieur au diamètre intérieur d'un tube du faisceau (3), non reliés entre eux et enfilés l'un à la suite de l'autre sur la gaine souple (32) de l'élément de transmission en un nombre tel que la longueur totale des éléments tubulaires (33) placés bout à bon soit inférieure à la longueur de la gaine souple (32) d'une longueur sensiblement égale à la longueur d'un élément annulaire (33).

2.- Dispositif suivant la revendication 1, caractérisé par le fait que les éléments annulaires (33) sont tous identiques.

3.- Dispositif suivant la revendication 2, caractérisé par le fait que les éléments annulaires (33) sont constitués par des portions de tube délimitées par des plans de sections droites.

4.- Dispositif suivant la revendication 2, caractérisé par le fait que les éléments annulaires (48) sont constitués par des pièces tubulaires cylindriques ayant une extrémité (49) constituée par une surface sphérique convexe et une extrémité opposée (50) constituée par une surface sphérique concave de même rayon.

5.- Dispositif suivant la revendication 1, caractérisé par le fait que les éléments annulaires (36, 38, 39, 40, 42, 43, 45, 46) sont de deux types différents et disposés de manière alternée suivant la longueur de l'élément de transmission allongé (30).

6.- Dispositif suivant la revendication 5, caractérisé par le fait que les éléments annulaires (36) d'un premier type sont constitués par des pièces tubulaires cylindriques ayant des extrémités chanfreinées concaves (37) et les éléments du second type (38) par des billes sphériques traversées par un alésage de direction radiale.

7.- Dispositif suivant la revendication 5, caractérisé par le fait que les éléments (39) d'un premier type sont constitués par des billes sphériques traversées par un alésage de direction radiale et les éléments (40) d'un second type par des billes sphériques traversées par un alésage de direction radiale et comportant, autour de l'alésage central, deux parties d'engagement en forme de calotte sphérique concave (41).

8.- Dispositif suivant la revendication 5, caractérisé par le fait que les éléments (42) d'un premier type sont constitués par des anneaux comportant une surface d'engagement tronconique (44) sur chacune de leurs faces et les éléments du second type par des pièces tubulaires (43) comportant des parties d'extrémité chanfreinées susceptibles de venir s'engager dans les surfaces d'engagement (44) en vis-à-vis de deux éléments (42) du premier type.

9.- Dispositif suivant la revendication 5, caractérisé par le fait que les éléments du premier type (45) sont constitués par des anneaux comportant une surface d'engagement tronconique (47) sur chacune de leurs faces et les éléments du second type (46) par des billes sphériques traversées par un alésage de direction radiale.

10.- Dispositif suivant l'une quelconque des revendications 1 à 9, caractérisé par le fait que les éléments annulaires (33, 36, 38, 39, 40, 42, 43, 45, 46, 48) sont constitués par une matière plastique rigide.

11.- Utilisation d'un dispositif d'introduction et de mise en place suivant l'une quelconque des revendications 1 à 10, pour la mise en place d'éléments de chauffage électrique (20) dans les parties cintrées (4) des tubes (3) du faisceau d'un générateur de vapeur.

12.- Utilisation d'un dispositif d'introduction et de mise en place suivant l'une quelconque des revendications 1 à 10, pour la mise en place d'une sonde telle qu'une sonde à courant de Foucault ou à ultrasons dans un tube d'un échangeur de chaleur.

FIG.1

FIG. 2

FIG. 10

EP 0 399 863 A1

FIG. 3

FIG.4

FIG.5

FIG.6

FIG.7

FIG.8

FIG.9

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-147648 (BBC)<br>* abrégé; figures * | 1-3, 5,<br>7, 10,<br>12 | F22B37/00<br>F16C1/20<br>G01N27/90 |
| | --- | | |
| A | FR-A-2613835 (FRAMATOME)<br>* page 7, ligne 23 - page 11, ligne 6; figures * | 1 | |
| | --- | | |
| A | FR-E-40783 (CORSET) | | |
| | --- | | |
| A | US-A-3546961 (MARTON) | | |
| | --- | | |
| A | DE-C-723746 (WILLMANN) | | |
| | --- | | |
| A | FR-E-53931 (CORSET) | | |
| | ----- | | |

**DOMAINES TECHNIQUES RECHERCHES (Int. Cl.5 )**

F22B
G01N
G21C
F16C

Le présent rapport a été établi pour toutes les revendications

| Lieu de la recherche | Date d'achèvement de la recherche | Examinateur |
|---|---|---|
| LA HAYE | 18 JUILLET 1990 | VAN GHEEL J.U.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)